# EUROPEAN PATENT SPECIFICATION

(11) **EP 3 315 894 B1**
(45) Date of publication and mention of the grant of the patent: **03.03.2021**
(21) Application number: 17198103.8
(22) Date of filing: 24.10.2017
(51) Int. Cl.: F41G 3/26, F41A 33/02, G09B 9/00, F41J 5/02

(54) **A DETECTOR ASSEMBLY OF ELECTROMAGNETIC BEAMS**
ANORDNUNG ZUR DETEKTION VON ELEKTROMAGNETISCHEN STRAHLEN
ENSEMBLE DÉTECTEUR DE FAISCEAUX ÉLECTROMAGNÉTIQUES

(30) Priority: 27.10.2016 IT 201600108710
(43) Date of publication of application: 02.05.2018
(73) Proprietor: LACS S.r.l., 46100 Mantova (MN) (IT)
(72) Inventor: MIAN, Sergio, 31030 Borso del Grappa (TV) (IT); LEPRE, Alessia, Motta di Livenza (UD) (IT)
(74) Representative: Trentin, Michele

(56) References cited:
- EP-A2- 0 067 654
- WO-A1-2010/019327
- WO-A1-2013/160445
- FR-A1- 2 545 204
- US-A- 4 177 580
- US-A1- 2004 029 079

## Description

### Field of application

The present invention is applicable to the tactical gaming or of military event simulation sector and specifically relates to laser tag tactical simulation equipment.

More in detail, the present invention relates to a method and an assembly for detecting electromagnetic beams simulating bullets in a military tactical simulation with laser tag.

### State of the art

Both in sporting activities and team games and in the professional field, military and police tactics have been particularly developed and widespread. This scope includes activities called laser tag or laser games, as well as, of course, the training of Special Forces and armed forces through the use of laser beams instead of bullets.

In all of these situations, an important aspect is the precision and the realism of tactical simulation, not only to ensure the proper running of the game in the ludic case, but above all to ensure a perfect tactical simulation in case of use by military or public security forces.

One of the relevant aspects, in this sense, is the indication to the users of a hit.

According to the prior art, this is done by temporarily lighting the hit user by means of appropriate LED emitters worn by each participant to the simulation.

As this easily allows you to figure out who was hit in the instants which follows the shot, this technical arrangement has some drawbacks that limit the realism of the simulation.

In fact, a first drawback is due to the fact that the lighting of the user occurs regardless of the exact hit point. In other words, during the simulation both the shooting user and the hit user only know that at least one shot hit the target, but they cannot understand if that shot would cause a wound or the death of the user and, in case of wound, the entity of the same.

In addition, with the known techniques, it is not possible to know which part of the user was really hit. It is evident that a wound on the arm is certainly different from a gunshot to the heart or to vital organs. In addition, since some sensors are typically placed on the weapon, it is evident that a hit weapon does not necessarily involve physical damage to the user. As mentioned, however, the prior art does not allow to differentiate such situations.

In this sense, it is known the patent document EP 0 067 654 which teaches to illuminate the hit areas differently to indicate whether they are vital or not.

However, a drawback of this known technique is that it is not possible to determine the extent of the created damage. For example, it is obvious that a large-calibre bullet hitting an arm involves a physical damage which is different with respect to a small-calibre bullet. Even a bullet and a splinter that possibly hit vital areas have different effects. Even in this case, however, the prior art does not allow to differentiate the visual indication of the entity of the created damage.

Another disadvantage is that the prior art, typically, does not take into account of the effects of gunshots on surrounding elements, such as tanks, explosives, ammunition which, if hit, may explode and involve users in surrounding areas.

### Presentation of the invention

The object of the present invention is to, at least partially, overcome the above drawbacks by providing a method of detecting electromagnetic beam simulating bullets which allows the users to understand whether a shot hit the target.

Another object is that the method of the invention immediately inform the users of the entity of the damage caused by the gunshot.

A further object is that the method of the invention immediately inform the users indicating which part of the body was hit by the gunshot.

In other words, the object of the method of the invention is to improve the realism of the tactical simulation by immediately informing the involved users on the real effects of a gunshot.

Such aims, as well as others which will be clearer below, are achieved by a method of detecting electromagnetic beams simulating bullets in a military tactical simulation according to the following claims, which are to be considered as an integral part of this patent.

Specifically, the method inter alia comprises a step of detecting electromagnetic beam having an incidence on one or more areas of a group of areas subject to monitoring and therefore of interest. There is then a step of determining which area has been hit and a step of decoding the information contained in the electromagnetic beams in order to determine the type of bullets simulated by these electromagnetic beams.

After that, there is a step of determining the real effects that these type of bullets would have obtained if they had really hit the identified areas and a subsequent lighting phase of affected areas according to a predetermined coding according to the real effects that would have occurred.

All this allows, advantageously, to effect an immediate visual detection of the gunshots which hit the target. This allows, advantageously, not only to indicate to the hit subjects and, possibly, to the shooters the type of damage being caused, but also, still advantageously, to understand immediately whether any support staff (e.g. medical staff) should or should not intervene, significantly improving the quality of the tactical simulation.

In other words, the report of the caused damage is determined not only by the affected area, but also by what hit that area. Both of these data, however, are not merely summed up, but a processing is done in order to determine the real damage created. In fact, the fact that a splinter hits a vital area does not necessarily determine the death of the hit user as it depends on the type of splinter and possibly also on its provenience. Also, the type of weapon used is a fundamental information since, not necessarily, a bullet coming from a weapon is not lethal even when it hits areas usually considered non-lethal such as an arm or a leg.

According to the above, it is evident that said objects are also achieved by an assembly according to claim 4.

Advantageously, therefore, the type of lighting immediately informs the users on the kind of damage caused.

Even more advantageously, the lighting of one or more sensors is not determined solely by a gunshot hitting them, but also by the damage caused to the sensors themselves and to the adjacent ones. This allows the diversification of reporting based on the damage that would have been provoked in reality.

Still advantageously, the separate lighting management of the sensors allows to indicate the real damage on each area.

With regard to the type of lighting, according to an aspect of the invention, it is determined by a colour coding to illuminate the optical sensors according the real effects that the simulated bullets would have in case of a gunshot hitting the target. According to another aspect of the invention, the type of illumination is determined by its variable frequency pulse modulation and duration according to the entity of the damage.

In either case, it is then possible to immediately make clear the entity of the damage.

### Brief description of the drawings

Further features and advantages of the invention will be more evident in light of the detailed description of some preferred, but not exclusive, embodiments of an assembly for the detection of electromagnetic beams simulating bullets in a military tactical simulation according to the invention, illustrated by way of non-limiting example with the aid of the accompanying drawings tables, wherein:
FIG. 1 represents an assembly detecting electromagnetic beams according to the invention in schematic view.
FIG. 2 represents an embodiment detail of the assembly of FIG. 1.

### Detailed description of a preferred embodiment example

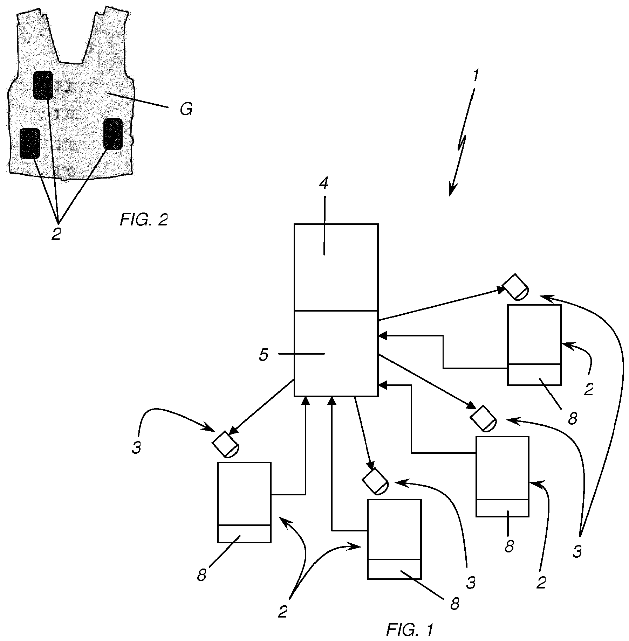

With reference to the above figures, and in particular to Fig. 1, it is disclosed a detector assembly **1** of electromagnetic beams suitable for implementing the method of the invention. This assembly **1** is advantageously, but not exclusively, used to perform military tactical simulations for detecting electromagnetic beams simulating bullets.

In this sense, the detector assembly **1** comprises a plurality of optical sensors **2** which, in effect, perform the function of detecting electromagnetic beams of incidence areas of interest which are thus monitored.

Fig. 2 shows an exemplary embodiment wherein the optical sensors **2** are coupled to a wearable jacket **G** by a user, but this detail should not be considered as limitative for the present invention. In fact, according to different embodiments of the invention, the sensors are coupled to different garments such as trousers, helmets or other. Obviously, according to other embodiments of the invention, users use more garments at the same time and each one is provided with more sensors. In any case, it should be noted that the assembly **1** of the invention comprises a plurality of sensors so as to cover several parts of the user body.

According to another aspect of the invention, the detector assembly **1** also includes a plurality of light emitters **3** each coupled with a respective optical sensor **2** to illuminate it.

In this way, advantageously, it is possible to use the lighting of each single sensor to provide directly information to users performing the tactical simulation. According to some variants of the embodiment, the same information is transferred in real time or stored on the storage medium to be subsequently processed for analysis and statistical purposes.

Typically, such optical emitters include RGB LEDs, but such a detail should not be considered as limiting the invention.

According to a further aspect of the invention, the detector assembly **1** also includes a storage device **4** for storing data relating to the positioning of the optical sensors **2.**

According to another aspect of the invention, the detector assembly **1** also includes a plurality of decoder circuits **8** each coupled with a respective optical sensor **2** for decoding coded data in the electromagnetic beams. Such beams, in fact, comprises a plurality of information on the shooter, the type of weapon used, the size of the bullet, the shooting point, and more.

This embodiment should not be considered as limiting for the invention. In particular, the fact that the decoder circuits are integrated with the respective optical sensors is only one possible exemplary embodiment of the invention.

Additionally, there can be any decoder circuits regardless of the number of optical sensors. In particular, according to a particular embodiment of the invention, not shown in the figures, there is only one decoder circuit integrated with the logic unit.

In any case, the assembly **1** also includes a logic control unit **5** operatively connected to the optical sensors **2,** to the light emitters **3,** to the decoder circuits **8** and to the storage device **4** for controlling the illumination of the optical sensors **2** according to a predetermined lighting coding in accordance with the real effects that the simulated bullets would have in case of a shot hitting the target.

In other words, advantageously, the detector assembly **1** of the invention does not merely signal the gunshot by illuminating the hit optical sensor **2,** but it illuminates appropriately the sensors **2** involved by the gunshot, i.e. with a type of lighting enabling to understand immediately the entity of the damage. This is possible, first of all, by knowledge of the logic unit 5 of the arrangement of each optical sensor 2. In addition, knowing the type of bullet hitting the target and its provenance allows to determine the real consequences that the gunshot would have. For example, in the case of optical sensors 2 coupled to the various parts of the body of a user, it is evident that a gunshot on an arm has different consequences from a shot in the head or from a shot in a leg or a shot in the abdomen or to the heart. At the same time, the same area hit by different bullets often leads to different consequences. With the assembly **1** of the invention, the type of illumination allows this information to be obtained immediately.

Even more advantageously, some portions of the body may be protected by special protection elements such as ballistic protections or the like, so that the logic unit **5** can, in such cases, evaluate differently the damage created not only according to the ballistic protection but also with the kind of bullet that in some cases still manages to overcome that protection.

Still advantageous, the logic unit **5,** controlling multiple sensors **2,** can also command the ignition of optical sensors **2** not directly hit by the electromagnetic beam, but anyway subject to damage. For example, if a weapon, supplied to a user was hit, it is likely that it could explode and cause multiple wounds to the user. A further example is a gunshot of a large-calibre weapon that, although it may hit only one sensor it would really involve several areas.

In any case, the decoded information allow the logical unit **5** to improve its analysis of the effects of the gunshot and to command the more suitable type of lighting, thus greatly improving the realism of the tactical simulation.

It is evident that the type of encoded information in the electromagnetic beams can be the most varied. In this regard, the above list should not be considered a limiting detail for the invention. Likewise, also the number of optical sensors and the number of emitter elements are not limiting features for the invention, as well as the number of storage devices and the number of logical units. In addition, according to different variants of the embodiment, there are cases where not all optical sensors are provided with lighting.

As for the predetermined coding, according to the embodiment described herein it comprises a colour coding, i.e. that coding consists of a colour scale each colour indicating a predetermined entity of caused damage. This is achieved by means of previously mentioned RGB LEDs.

However, such a detail should not be considered a limiting detail for the invention. According to a variant of the embodiment, in fact, the predetermined coding is obtained with a light pulse modulation. This modulation allows to distinguish the type of lighting by varying the frequency and duration of the pulses. According to further variants of the embodiment, the encoding can be obtained by mixing the two above systems or with alternative systems.

Operatively, the method of the invention comprises a first step of detecting electromagnetic beam having an incidence on one or more areas of a group of areas subject to monitoring. There is then a step of decoding the information contained in the electromagnetic beams in order to determine at least the type of bullet they simulate.

In addition, there is a step of determining the hit areas.

Having such information, it is thus possible to proceed with the step of processing these data in order to determine the real effects that said type of simulated bullets would have obtained if they had really hit those areas.

It follows then a step of lighting at least one portion of the hit areas according to a predetermined lighting coding based on the real processed effects so that they are optically detectable during the tactical simulation.

The advantages of this method have been already discussed in the description of the assembly that implements it; for this reason they will not be repeated in this section.

According to one aspect of the invention, during the step of decoding the information there is also the determination of the starting point of the simulated bullet in such a way that the processing of its real effects takes into account also the distance between the starting point and hit areas.

Since in some cases the magnitude of the damage caused is strongly influenced by this parameter, the advantageous increase of realism of the tactical simulation becomes evident.

According to another aspect of the invention, before the step of determining the real effects that said type of simulated bullets would have obtained if they had really hit the area, there is a step of determining the presence of protective elements or the like in correspondence of the involved area. In this sense, therefore, the step of determining the real effects that said type of simulated bullets would have obtained if they had really hit the area takes into account the presence of these protective elements, thereby increasing the realism of tactical simulation.

However, it is evident that the method and the detector assembly for electromagnetic beams of the invention achieve all set goals.

Specifically, they allow the users to immediately realize if there have been a gunshot and the real entity of the damage.

In addition, when used on users it allows to immediately notify not only which part has been hit, but also the real entity of the provoked damage.

More specifically, therefore, the realism of the tactical simulation has clearly improved, promptly informing users on the effects of a gunshot related both to the hit area, and to the type of bullet which hit that area.

## Claims

1. A method for detecting electromagnetic beams simulating bullets in a military tactical simulation comprising the following steps:
- detecting one or more electromagnetic beams affecting one or more areas of a group of monitored areas, each of said areas comprising at least one detector assembly adapted for detecting said one or more electromagnetic beams, said detector assembly comprising:
o plural optical sensors (**2**) coupled to a garment wearable by a user and adapted for detecting electromagnetic beams, each of said plural optical sensors (**2**) being coupled to a respective light emitter (**3**) to light it;
∘ at least one storage device (**4**) adapted for storing data relating to at least the positioning of said sensors (**2**);
∘ at least one decoder circuit (**8**) adapted for decoding coded data in the electromagnetic beams, the coded data in the electromagnetic beams comprising at least information on the type of bullet they simulate;
∘ at least one logic control unit (5) operatively connected to at least said plural optical sensors (2), to said at least one decoder circuit (8), to said light emitters (3), and to said at least one storage device (4) configured for controlling the illumination of said plural optical sensors according to a predetermined lighting coding in accordance with the real effects that the simulated bullets would have in case of a shot hitting the target;
- determining the area hit by said electromagnetic beams,
- decoding the information contained in said electromagnetic beams to determine at least the type of bullet they simulate;
- determining the real effects that said type of simulated bullets would have obtained if they had really hit said area;
- lighting at least one portion of said area according to a predetermined lighting coding according to said real effects so that said real effects are optically detectable during the tactical simulation.

2. Method according to claim 1, **characterized in that** said step of decoding the information also includes the step of determining the starting point of the simulated bullet so that said step of determining said real effects also takes into account the distance between said starting point and said area.

3. Method according to claim 1 or 2, **characterized in that,** before said step of determining the real effects that said type of simulated bullets would have obtained if they had really hit said area, there is a step of determining the presence of protective elements or the like in correspondence of said area, said step of determining the real effects that said type of simulated bullets would have obtained if they had really hit said area taking into account also the presence of said protective elements.

4. Detector assembly for electromagnetic beams simulating bullets in a military tactical simulation, said detector assembly (**1**) comprising:
- plural optical sensors (**2**) coupled to a garment wearable by a user and adapted for detecting electromagnetic beams, each of said plural optical sensors (**2**) being coupled to a respective light emitter (**3** to light it;
- at least one storage device (**4**) adapted for storing data relating to at least the positioning of said sensors (**2**);
**characterized in** comprising:
- at least one decoder circuit (**8**) adapted for decoding coded data in the electromagnetic beams, the coded data in the electromagnetic beams comprising at least information on the type of bullet they simulate;
- at least one logic control unit (**5**) operatively connected to at least said plural optical sensors (**2**), to said at least one decoder circuit (8), to said light emitters (**3**), and to said at least one storage device (**4**) configured for controlling the illumination of said plural optical sensors (**2**) according to a predetermined lighting coding in accordance with the real effects that the simulated bullets would have in case of a shot hitting the target.

5. Detector assembly according to claim **4, characterized in that** said predetermined lighting coding comprises a colour coding adapted for lighting said plural optical sensors (**2**) according to the real effects that the simulated bullets would have in case of a shot hitting the target.

6. Detector assembly according to claim 6 **5, characterized in that** said light emitters (**3**) comprises RGB LEDs.

7. Detector assembly according to any of the preceding claims 4 to 6, **characterized in that** said predetermined lighting coding comprises a predetermined frequency and duration of the lighting of said plural optical sensors according to the real effects that the simulated bullets would have in case of a shot hitting the target.

## Patentansprüche

1. Verfahren zum Detektieren von elektromagnetischen Strahlen, die Geschosse in einer militärtaktischen Simulation simulieren, umfassend die folgenden Schritte:
- Detektieren eines oder mehrerer elektromagnetischer Strahlen, die ein oder mehrere Gebiete einer Gruppe von überwachten Gebieten tangieren, wobei jedes der Gebiete mindestens eine Detektoranordnung umfasst, die zum Detektieren des einen oder der mehreren elektromagnetischen Strahlen ausgelegt ist, wobei die Detektoranordnung Folgendes umfasst:
∘ mehrere optische Sensoren (2), die mit einem von einem Benutzer tragbaren Kleidungsstück gekoppelt und zum Detektieren elektromagnetischer Strahlen ausgelegt sind, wobei jeder der mehreren optischen Sensoren (2) mit einem jeweiligen Lichtemitter (3) gekoppelt ist, um ihn zu beleuchten;
∘ mindestens eine Speichervorrichtung (4), die zum Speichern von Daten in Zusammenhang mit zumindest der Positionierung der Sensoren (2) ausgelegt ist;
∘ mindestens eine Decodiererschaltung (8), die zum Decodieren codierter Daten in den elektromagnetischen Strahlen ausgelegt ist, wobei die codierten Daten in den elektromagnetischen Strahlen zumindest Informationen über den Typ des Geschosses, das sie simulieren, umfassen;
∘ mindestens eine Logiksteuereinheit (5), die zumindest mit den mehreren optischen Sensoren (2), mit der mindestens einen Decodiererschaltung (8), den Lichtemittern (3) und der mindestens einen Speichervorrichtung (4) wirkverbunden und zum Steuern der Beleuchtung der mehreren optischen Sensoren gemäß einer vorbestimmten Lichtcodierung in Übereinstimmung mit den realen Effekten, die die simulierten Geschosse in dem Fall hätten, wenn ein Schuss das Ziel trifft, konfiguriert ist;
- Bestimmen des durch die elektromagnetischen Strahlen getroffenen Gebiets,
- Decodieren der in den elektromagnetischen Strahlen enthaltenen Informationen, um zumindest den Typ des Geschosses, das sie simulieren, zu bestimmen;
- Bestimmen der realen Effekte, die der Typ der simulierten Geschosse erzielt hätte, wenn sie das Gebiet tatsächlich getroffen hätten;
- Beleuchten zumindest eines Teils des Gebiets gemäß einer vorbestimmten Lichtcodierung gemäß den realen Effekten, so dass die realen Effekte während der taktischen Simulation optisch detektierbar sind.

2. Verfahren nach Anspruch 1, **dadurch gekennzeichnet, dass** der Schritt des Decodierens der Informationen auch den Schritt des Bestimmens des Startpunkts des simulierten Geschosses enthält, so dass der Schritt des Bestimmens der realen Effekte auch den Abstand zwischen dem Startpunkt und dem Gebiet berücksichtigt.

3. Verfahren nach Anspruch 1 oder 2, **dadurch gekennzeichnet, dass** es vor dem Schritt des Bestimmens der realen Effekte, die der Typ der simulierten Geschosse erzielt hätte, wenn sie das Gebiet tatsächlich getroffen hätten, einen Schritt des Bestimmens des Vorhandenseins von Schutzelementen oder dergleichen in Übereinstimmung mit dem Gebiet, wobei der Schritt des Bestimmens der realen Effekte, die der Typ der simulierten Geschosse erzielt hätte, wenn sie das Gebiet tatsächlich getroffen hätten, auch das Vorhandensein der Schutzelemente berücksichtigt.

4. Detektoranordnung für elektromagnetische Strahlen, die Geschosse in einer militärtaktischen Simulation simulieren, wobei die Detektoranordnung (1) Folgendes umfasst:
- mehrere optische Sensoren (2), die mit einem von einem Benutzer tragbaren Kleidungsstück gekoppelt und zum Detektieren elektromagnetischer Strahlen ausgelegt sind, wobei jeder der mehreren optischen Sensoren (2) mit einem jeweiligen Lichtemitter (3) gekoppelt ist, um ihn zu beleuchten;
- mindestens eine Speichervorrichtung (4), die zum Speichern von Daten in Zusammenhang mit zumindest der Positionierung der Sensoren (2) ausgelegt ist;
**gekennzeichnet durch** das Umfassen von:
- mindestens einer Decodiererschaltung (8), die zum Decodieren codierter Daten in den elektromagnetischen Strahlen ausgelegt ist, wobei die codierten Daten in den elektromagnetischen Strahlen zumindest Informationen über den Typ des Geschosses, das sie simulieren, umfassen;
- mindestens einer Logiksteuereinheit (5), die zumindest mit den mehreren optischen Sensoren (2), mit der mindestens einen Decodiererschaltung (8), den Lichtemittern (3) und der mindestens einen Speichervorrichtung (4) wirkverbunden und zum Steuern der Beleuchtung der mehreren optischen Sensoren (2) gemäß einer vorbestimmten Lichtcodierung in Übereinstimmung mit den realen Effekten, die die simulierten Geschosse in dem Fall hätten, wenn ein Schuss das Ziel trifft, konfiguriert ist.

5. Detektoranordnung nach Anspruch 4, **dadurch gekennzeichnet, dass** die vorbestimmte Lichtcodierung eine Farbcodierung umfasst, die zum Beleuchten der mehreren optischen Sensoren (2) gemäß den realen Effekten, die die simulierten Geschosse in dem Fall hätten, wenn ein Schuss das Ziel trifft, ausgelegt ist.

6. Detektoranordnung nach Anspruch 5, **dadurch gekennzeichnet, dass** die Lichtemitter (3) RGB LEDs umfassen.

7. Detektoranordnung nach einem der vorhergehenden Ansprüche 4 bis 6, **dadurch gekennzeichnet, dass** die vorbestimmte Lichtcodierung eine vorbestimmte Frequenz und Dauer der Beleuchtung der mehreren optischen Sensoren gemäß den realen Effekten, die die simulierten Geschosse in dem Fall hätten, wenn ein Schuss das Ziel trifft, umfasst.

## Revendications

1. Procédé de détection de faisceaux électromagnétiques simulant des balles dans une simulation tactique militaire comprenant les étapes suivantes consistant à :
- détecter un ou plusieurs faisceaux électromagnétiques affectant une ou plusieurs zones d'un groupe de zones surveillées, chacune desdites zones comprenant au moins un ensemble détecteur adapté pour détecter lesdits un ou plusieurs faisceaux électromagnétiques, ledit ensemble détecteur comprenant :
o plusieurs capteurs optiques (2) couplés à un vêtement portable par un utilisateur et adaptés pour détecter des faisceaux électromagnétiques, chacun desdits plusieurs capteurs optiques (2) étant couplé à un émetteur de lumière respectif (3) pour l'allumer ;
o au moins un dispositif de stockage (4) adapté pour stocker des données relatives à au moins le positionnement desdits capteurs (2) ;
o au moins un circuit décodeur (8) adapté pour décoder des données codées dans les faisceaux électromagnétiques, les données codées dans les faisceaux électromagnétiques comprenant au moins des informations sur le type de balle qu'ils simulent ;
o au moins une unité de commande logique (5) connectée de manière fonctionnelle à au moins lesdits plusieurs capteurs optiques (2), audit au moins un circuit décodeur (8), auxdits émetteurs de lumière (3), et audit au moins un dispositif de stockage (4) configuré pour commander l'éclairage desdits plusieurs capteurs optiques selon un codage d'éclairage prédéterminé conformément aux effets réels que les balles simulées auraient dans le cas où un tir toucherait la cible ;
- déterminer la zone touchée par lesdits faisceaux électromagnétiques,
- décoder les informations contenues dans lesdits faisceaux électromagnétiques pour déterminer au moins le type de balle qu'ils simulent ;
- déterminer les effets réels que ledit type de balles simulées aurait obtenus si elles avaient vraiment touché ladite zone ;
- éclairer au moins une partie de ladite zone selon un codage d'éclairage prédéterminé selon lesdits effets réels de sorte que lesdits effets réels soient optiquement détectables durant la simulation tactique.

2. Procédé selon la revendication 1, **caractérisé en ce que** ladite étape consistant à décoder les informations inclut également l'étape consistant à déterminer le point de départ de la balle simulée de sorte que ladite étape consistant à déterminer lesdits effets réels prenne également en compte la distance entre ledit point de départ et ladite zone.

3. Procédé selon la revendication 1 ou 2, **caractérisé en ce que,** avant ladite étape consistant à déterminer les effets réels que ledit type de balles simulées aurait obtenus si elles avaient vraiment touché ladite zone, il existe une étape consistant à déterminer la présence d'éléments protecteurs ou analogues en correspondance avec ladite zone, ladite étape consistant à déterminer les effets réels que ledit type de balles simulées aurait obtenus si elles avaient vraiment touché ladite zone prenant également en compte la présence desdits éléments protecteurs.

4. Ensemble détecteur pour des faisceaux électromagnétiques simulant des balles dans une simulation tactique militaire, ledit ensemble détecteur (**1**) comprenant :
- plusieurs capteurs optiques (**2**) couplés à un vêtement portable par un utilisateur et adaptés pour détecter des faisceaux électromagnétiques, chacun desdits plusieurs capteurs optiques (**2**) étant couplé à un émetteur de lumière respectif (**3**) pour l'allumer ;
- au moins un dispositif de stockage (**4**) adapté pour stocker des données relatives à au moins le positionnement desdits capteurs (**2**) ;
**caractérisé en ce qu'**il comprend :
- au moins un circuit décodeur (**8**) adapté pour décoder des données codées dans les faisceaux électromagnétiques, les données codées dans les faisceaux électromagnétiques comprenant au moins des informations sur le type de balle qu'ils simulent ;
- au moins une unité de commande logique (**5**) connectée de manière fonctionnelle à au moins lesdits plusieurs capteurs optiques (**2**), audit au moins un circuit décodeur (8), auxdits émetteurs de lumière (**3**), et audit au moins un dispositif de stockage (**4**) configuré pour commander l'éclairage desdits plusieurs capteurs optiques (**2**) selon un codage d'éclairage prédéterminé conformément aux effets réels que les balles simulées auraient dans le cas où un tir toucherait la cible.

5. Ensemble détecteur selon la revendication 4, **caractérisé en ce que** ledit codage d'éclairage prédéterminé comprend un codage de couleurs adapté pour éclairer lesdits plusieurs capteurs optiques (**2**) selon les effets réels que les balles simulées auraient dans le cas où un tir toucherait la cible.

6. Ensemble détecteur selon la revendication **5, caractérisé en ce que** lesdits émetteurs de lumière (**3**) comprennent des LED RVB.

7. Ensemble détecteur selon l'une quelconque des revendications précédentes 4 à 6, **caractérisé en ce que** ledit codage d'éclairage prédéterminé comprend une fréquence et une durée prédéterminées de l'éclairage desdits plusieurs capteurs optiques selon les effets réels que les balles simulées auraient dans le cas où un tir toucherait la cible.
